# FASCICULE DE BREVET EUROPEEN

(11) **EP 1 674 886 B1**
(45) Date de publication et mention de la délivrance du brevet: **01.04.2009**
(21) Numéro de dépôt: 05111351.2
(22) Date de dépôt: 28.11.2005
(51) Int. Cl.: G01S 13/95

(54) **Dispositif de détection de turbulences atmosphériques**
Vorrichtung zur Detektion von atmosphärischer Turbulenz
Device for detecting atmospheric turbulence

(30) Priorité: 23.12.2004 FR 0413836
(43) Date de publication de la demande: 28.06.2006
(73) Titulaire: Thales, 92200 Neuilly sur Seine (FR)
(72) Inventeur: Baillon, Bertrand, 31860 Pins Justaret (FR); Mutuel, Laurence, 26300, SAINT VINCENT LA COMMANDERIE (FR); Schlotterbeck, Jean-Pierre, 26300, ROCHEFORT SAMSON (FR)
(74) Mandataire: Collet, Alain

(56) Documents cités:
- EP-A- 1 416 293
- US-A- 4 195 931

## Description

L'invention concerne un dispositif de mesure à distance des propriétés de l'atmosphère, dispositif plus particulièrement utilisé pour la détection de turbulences atmosphériques. Le dispositif fonctionne sur le principe des lidars, utilisant la rétrodiffusion sur l'air d'un rayonnement laser. Le dispositif met en oeuvre une source laser généralement impulsionnelle. La propagation de l'impulsion laser est suivie de la réception d'une fraction du rayonnement réémis soit par des aérosols en suspension dans l'atmosphère soit par les molécules d'air de l'atmosphère. On s'intéresse particulièrement à la réception de longueurs d'ondes très proches de celle de la source laser. L'analyse du rayonnement rétrodiffusé se fait par interférométrie. On observe deux types de diffusion. Une première diffusion, appelée communément diffusion Mie, s'opère sur des aérosols en suspension dans l'atmosphère. Ces particules se meuvent à la vitesse du vent présent dans la zone d'observation de telle façon que la longueur d'onde rétrodiffusée est décalée du Doppler correspondant à la vitesse du vent par rapport à la longueur d'onde de la source laser. Une seconde diffusion, communément appelée diffusion Rayleigh s'opère sur les molécules de l'air. Le mouvement naturel des molécules génère une diffusion dont la largeur spectrale est plus importante que celle des particules en suspension dans l'atmosphère, mais dont la raie reste toujours centrée sur la raie de la diffusion Mie Au travers d'un interféromètre, les deux raies (Mie et Rayleigh) se superposent et il est difficile de les séparer sans matériel lourd, matériel généralement réservé aux études faites en laboratoire. L'invention vise à séparer les raies des diffusions Mie et Rayleigh de façon simple.

Un dispositif de détection de turbulences atmosphériques est connu de EP 1 416 293.

L'invention trouve une utilité particulière en aéronautique embarquée. Les aéronefs sont sensibles aux turbulences atmosphériques. A ce jour, il est difficile d'anticiper l'entrée d'un aéronef dans une zone de turbulence qui peut générer des contraintes mécaniques importantes sur la structure de l'aéronef et/ou blesser plus ou moins gravement les passagers non attachés et les membres d'équipage.

La détection de turbulences atmosphériques peut se faire, en avant de l'aéronef, au moyen d'un lidar, en mesurant la raie de la diffusion Rayleigh pour détecter des variations de densité et de température de l'air. Néanmoins, la présence d'aérosols et surtout la fluctuation de la densité des aérosols perturbe la mesure en raison d'une raie de la diffusion Mie d'intensité variable se superposant à la raie de la diffusion Rayleigh.

L'invention a pour but de permettre la réalisation d'une mesure de la raie de la diffusion Rayleigh en occultant la raie de la diffusion Mie de façon simple. Un dispositif conforme à l'invention peut facilement être embarqué à bord d'un aéronef.

A cet effet, l'invention a pour objet un dispositif de détection de turbulences atmosphériques comportant une source d'émission laser, des moyens optiques pour collecter un rayonnement rétrodiffusé par des cibles éclairées par la source d'émission, le rayonnement rétrodiffusé étant sensiblement centré autour d'une longueur d'onde de la source d'émission, des moyens pour générer des franges d'interférence issues du rayonnement rétrodiffusé, caractérisé en ce qu'il comporte un filtre spatial permettant de ne visualiser qu'une tâche centrale des franges d'interférence et au centre du filtre spatial, un masque permettant d'occulter le centre de la tâche centrale.

L'invention sera mieux comprise et d'autres avantages apparaîtront à la lecture de la description détaillée d'un mode de réalisation donné à titre d'exemple, description illustrée par le dessin joint dans lequel :
la figure 1 représente schématiquement un dispositif de détection de turbulences atmosphériques conforme à l'invention ;
la figure 2 représente plus en détail le parcours d'un rayonnement traversant des moyens pour générer des franges d'interférence et un filtre spatial ;
la figure 3 représente en vue de dessus les premières franges d'interférence en l'absence de filtre spatial ;
la figure 4 représente le filtre spatial en vue de dessus ;
la figure 5 représente l'intensité des premières franges d'interférence en l'absence de filtre spatial ;
la figure 6 représente le filtre spatial en vue de profil ;
la figure 7 représente l'intensité de la première frange d'interférence après masquage par le filtre spatial et en fonction du déplacement du filtre spatial ;
les figures 8a à 8e représentent en vue de dessus le masquage de la première frange d'interférence en fonction de la position du filtre spatial.

Par souci de simplicité, les mêmes éléments porteront les mêmes repères dans les différentes figures.

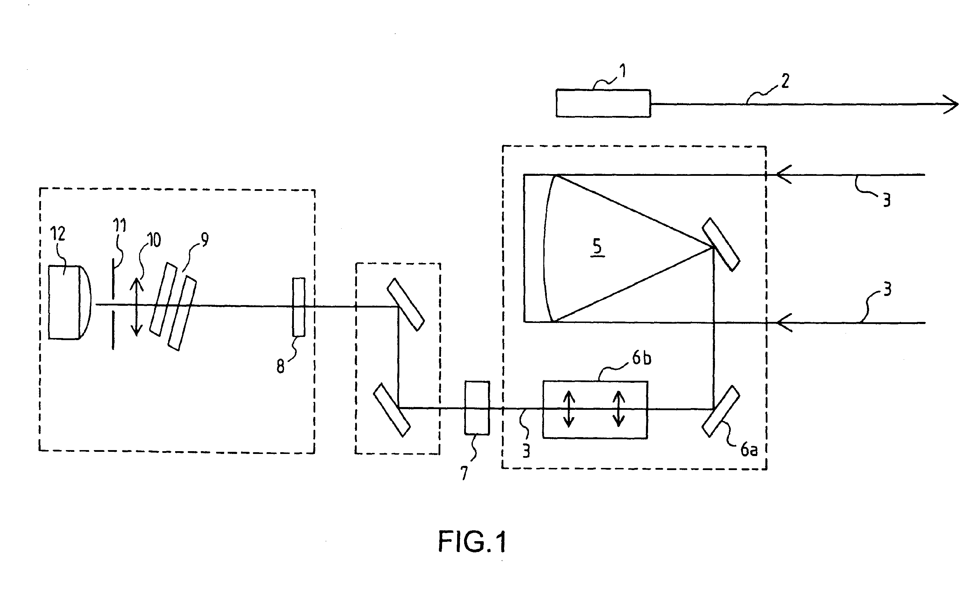

La figure 1 représente un dispositif de détection de turbulences atmosphériques. Le dispositif comporte une source d'émission laser 1 avantageusement impulsionnelle, émettant un rayonnement 2 dans une première direction. Le rayonnement 2 est rétrodiffusé sur des molécules d'air et des aérosols en suspension dans l'atmosphère. Le rayonnement rétrodiffusé par les cibles éclairées par la source d'émission laser 1 porte le repère 3. Le dispositif comporte des moyens optiques 4 pour collecter le rayonnement rétrodiffusé 3. Ces moyens optiques comportent par exemple un télescope de collection 5 et des moyens optiques 6a et 6b de mise en forme du rayonnement 3. On peut intercaler en sortie des moyens optiques 6 a et 6 b, sur le trajet du rayonnement 3, un volet mécanique 7 permettant d'interrompre le passage du rayonnement 3 et un filtre solaire 8 permettant d'éliminer tout rayonnement solaire situé en dehors de la bande spectrale utile et collecté par le télescope 5 avec le rayonnement rétrodiffusé 3. On utilise par exemple une source d'émission laser 1 émettant un rayonnement de longueur d'onde 355 nm ce qui, grâce au filtre solaire, permet au dispositif de fonctionner en plein jour.

Le dispositif comporte en outre des moyens 9 pour générer des franges d'interférence à partir du rayonnement rétrodiffusé 3, une lentille de focalisation 10, un filtre spatial 11 et un détecteur 12 permettant de mesurer l'intensité d'un rayonnement traversant le filtre spatial 11. Les moyens 9 pour générer des franges d'interférence comportent par exemple un filtre interférentiel de Fabry-perot.

Le volet mécanique 7 peut protéger les éléments 9 à 12 d'éblouissements intempestifs en dehors des périodes de mesure. On commande alors le détecteur 12 en synchronisme avec l'impulsion de la source 1 pour réaliser une mesure sur une plage de distance donnée.

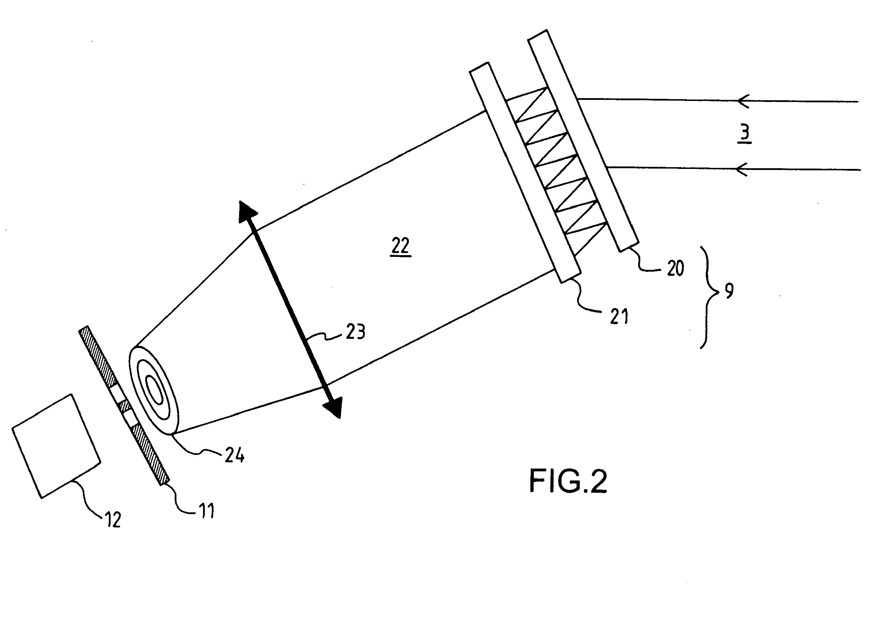

La figure 2 représente plus en détail le parcours d'un rayonnement traversant les moyens 9 pour générer des franges d'interférence et le filtre spatial 11. Les moyens 9 comportent avantageusement un filtre interférentiel de Fabry-perot. Le rayonnement rétrodiffusé 3 pénètre dans le filtre interférentiel comportant deux miroirs parallèles 20 et 21. Un rayonnement 22 sortant du filtre interférentiel est focalisé par une lentille 23 pour former des franges d'interférences 24. Le filtre spatial 11 est intercalé entre la lentille 23 et le détecteur 12.

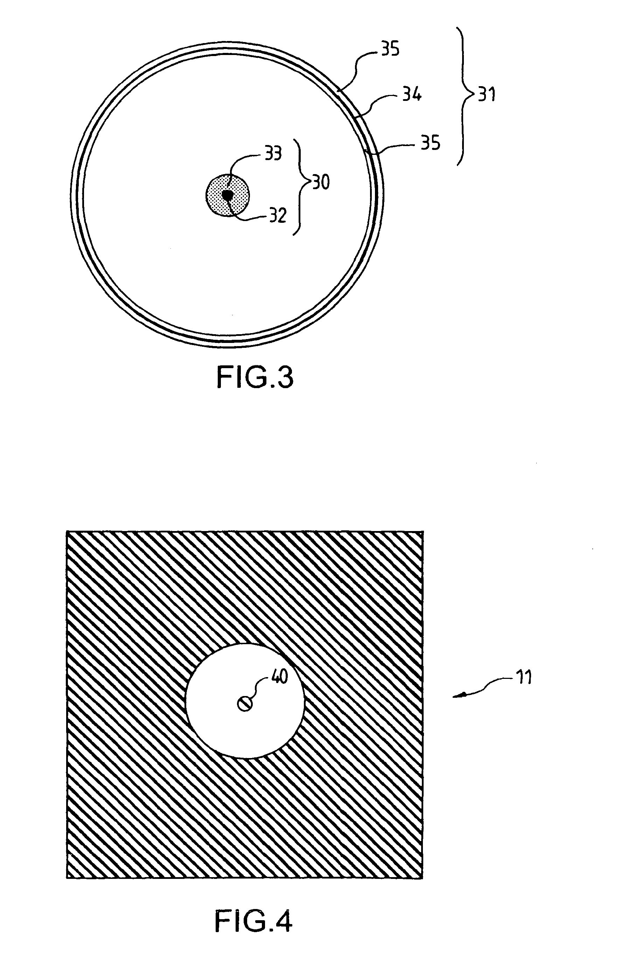

La figure 3 représente en vue de dessus les premières franges d'interférence en l'absence de filtre spatial 11. Les franges forment des anneaux concentriques autour d'une tâche centrale 30. Sur la figure 3, seules la tâche centrale 30 et le premier anneau 31 ont été représentés. La tâche centrale 30 forme la frange d'ordre le plus élevé et le premier anneau 31 forme la frange d'un ordre inférieur par rapport à la tâche centrale 30. La raie de la diffusion Mie forme au centre de la tâche centrale une zone 32 d'intensité élevée. A la périphérie de la zone 32, la raie de la diffusion Rayleigh forme une zone 33 d'intensité moindre. De même, la raie de la diffusion Mie forme au centre de l'anneau 31 une zone 34 d'intensité élevée et entourant la zone 34, la raie de la diffusion Rayleigh forme une zone 35 d'intensité moindre.

Avantageusement, les moyens pour générer des franges d'interférence comportent un asservissement permettant à la tâche centrale 30 de ne comporter aucun excédent fractionnaire d'ordre. Ainsi la raie de la diffusion Mie est bien au centre de la tâche centrale 30.

Lorsqu'on utilise un filtre interférentiel de Fabry-perot, l'asservissement règle la position de l'un des miroirs 20 ou 21 ou la position des deux miroirs 20 et 21 du filtre interférentiel 9, par exemple au moyen d'un dispositif piézo-électrique.

La figure 4 représente le filtre spatial 11 en vue de dessus. Le filtre spatial 11 permet de ne visualiser que la tâche centrale 30. Le filtre spatial 11 masque tous les anneaux d'ordre inférieur par rapport à la tâche centrale 30. Le filtre spatial 11 permet notamment de masquer l'anneau 31. Le filtre spatial 11 comporte un masque 40 permettant d'occulter le centre de la tâche centrale 30 et plus précisément le masque 40 permet d'occulter la raie de la diffusion Mie apparaissant sur la tâche centrale 30.

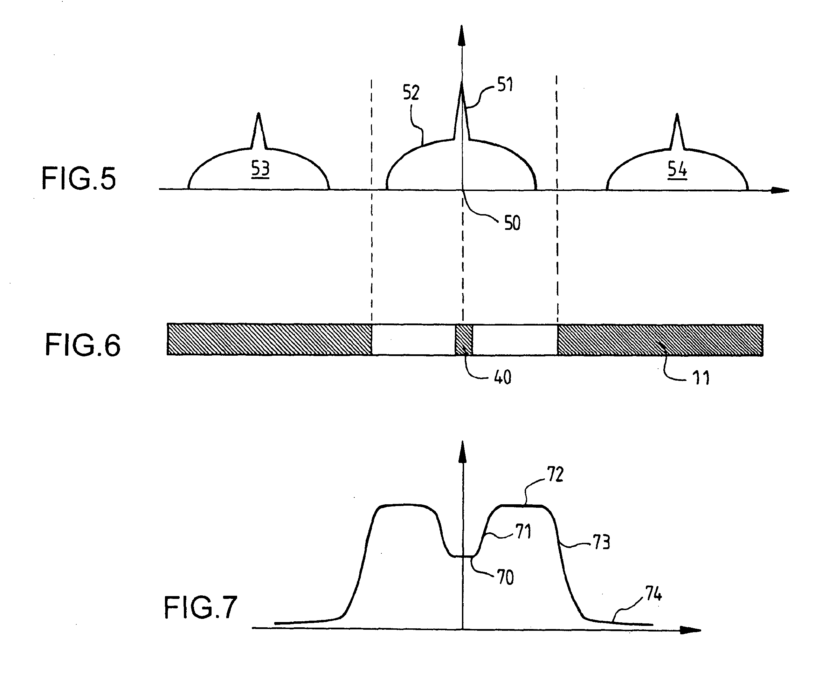

La figure 5 représente l'intensité des premières franges d'interférence en l'absence du filtre spatial 11. L'intensité est représentée par une courbe portée par un repère dans lequel l'abscisse donne la position de la frange selon un axe passant par un centre 50 de la tâche centrale 30. L'ordonnée du repère donne la valeur de l'intensité. L'origine des abscisses est définie pour l'intensité au centre 50. Les franges d'interférence étant symétriques autour de leur centre 50, la courbe représentant l'intensité est également symétrique par rapport à l'axe des ordonnées. L'intensité de la zone 32 formant la raie de la diffusion Mie de la tâche centrale 30 forme un pic 51 s'étendant autour de l'axe des ordonnées. L'intensité de la zone 33 formant la raie de la diffusion Rayleigh de la tâche centrale 30 a une forme 52 plus étalée que le pic 51 et d'intensité moindre. L'intensité de l'anneau 31 est représentée par deux éléments de courbe 53 et 54 semblables à celui représentant l'intensité de la tâche centrale 30. Les deux éléments 53 et 54 sont également symétriques par rapport à l'axe des ordonnées.

La figure 6 représente, de manière simplifiée, le filtre spatial 11 en vue de profil. Le filtre spatial occulte les éléments 53 et 54 et le masque 40 occulte le pic 51.

Le dispositif comporte avantageusement des moyens pour déplacer le filtre spatial 11 et son masque 40 dans une direction sensiblement perpendiculaire au rayonnement issu des moyens 9 pour générer des franges d'interférence. La figure 7 illustre la variation d'intensité lumineuse du rayonnement traversant le filtre spatial 11 lorsque celui ci se déplace.

La valeur de l'intensité est représentée en ordonnée et le déplacement en abscisse. Cette courbe est symétrique par rapport à une position centrée du filtre spatial 11 par rapport aux anneaux d'interférence. Cette position centrée est celle de l'origine des abscisses.

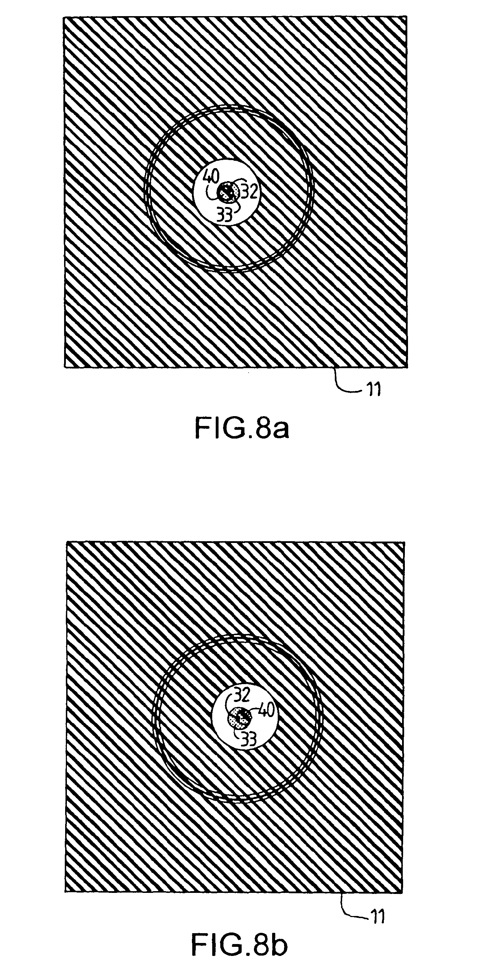

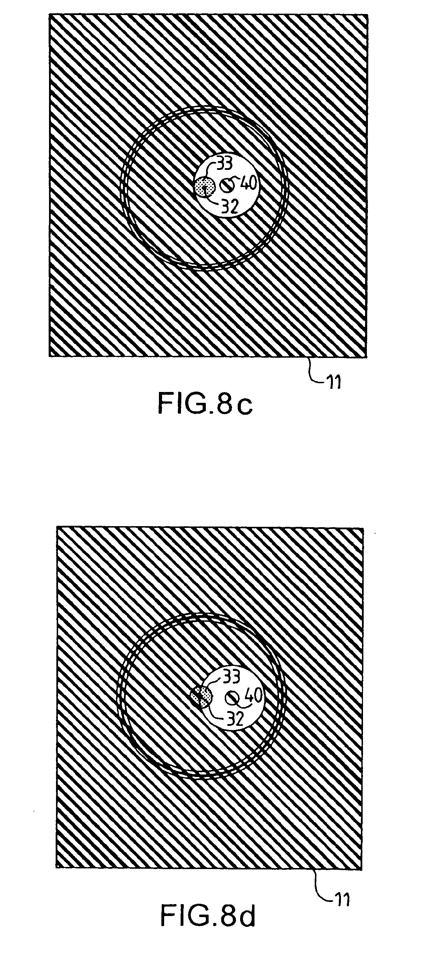

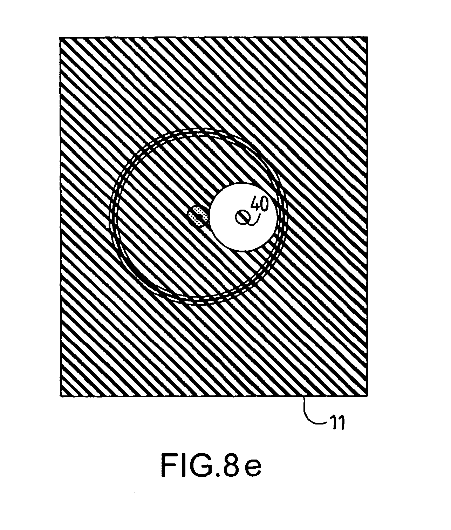

Les figures 8a à 8e représentent en vue de dessus différentes positions du filtre spatial 11 et de son masque 40 par rapport aux franges d'interférence. Sur la figure 8a le masque 40 du filtre spatial 11 occulte la raie de la diffusion Mie de la tâche centrale 30. L'intensité reçue par le détecteur 12 est celle de la raie de la diffusion Rayleigh de la tâche centrale 30. La valeur correspondante 70 de l'intensité passe par un minimum tant que la raie de la diffusion Mie est occultée La valeur 70 est portée sur la figure 7. Lorsque le filtre spatial 11 prend la position de la figure 8b en s'éloignant de sa position centrale, la raie de la diffusion Mie apparaît et l'intensité reçue par le détecteur 12 croit. La valeur de l'intensité correspondant à la position de la figure 8b est repérée 71 sur la figure 7. En s'éloignant encore de la position centrée, la tache centrale 30 apparaît complètement comme représenté sur la figure 8c et la valeur de l'intensité, repérée 72 sur la figure 7, est maximale. Les raies Mie et Rayleigh sont toutes deux captées par le détecteur 12. Lorsque le filtre spatial 11 s'éloigne encore de sa position centrée en prenant la position représentée sur la figure 8d, la valeur de l'intensité, repérée 73 sur la figure 7, diminue pour atteindre une quasi-extinction, repérée 74 sur la figure 7, du rayonnement traversant le filtre spatial 11 lorsque aucune des franges d'interférence n'est captée par le détecteur comme représenté sur la figure 8e. Le détecteur 12 mesure l'intensité globale du rayonnement traversant le filtre spatial 11. Le détecteur comporte par exemple une simple photodiode sensible à un rayonnement de la longueur d'onde de la source d'émission laser 1.

Le déplacement du filtre spatial 11 permet de mesurer l'intensité de la raie de la diffusion Rayleigh, à partir de la valeur 70 ainsi que la largeur spectrale de la raie de la diffusion Rayleigh à partir de la position du filtre spatial 11 donnant la valeur 73. Il est également possible de déterminer l'intensité de la raie de la diffusion Mie à partir de la valeur 72 et la largeur spectrale de la raie de la diffusion Mie à partir de la position du filtre spatial 11 donnant la valeur 71.

## Revendications

1. Dispositif de détection de turbulences atmosphériques comportant une source d'émission laser (1), des moyens optiques (5) pour collecter un rayonnement rétrodiffusé (3) par des cibles éclairées par la source d'émission (1), le rayonnement rétrodiffusé (3) étant sensiblement centré autour d'une longueur d'onde de la source d'émission (1), des moyens (9) pour générer des franges d'interférence (24) issues du rayonnement rétrodiffusé (3), **caractérisé en ce qu'**il comporte un filtre spatial (11) permettant de ne visualiser qu'une tâche centrale (30) des franges d'interférence et au centre du filtre spatial (11), un masque (40) permettant d'occulter le centre (32) de la tâche centrale (30).

2. Dispositif selon la revendication 1, **caractérisé en ce que** le masque (40) permet d'occulter une raie de la diffusion Mie du rayonnement collecté (3).

3. Dispositif selon l'une des revendications précédentes, **caractérisé en ce que** les moyens (9) pour générer des franges d'interférence comportent un filtre interférentiel de Fabry-perot.

4. Dispositif selon l'une des revendications précédentes, **caractérisé en ce que** les moyens (9) pour générer des franges d'interférence (24) comportent un asservissement permettant à la tâche centrale (30) de ne comporter aucun excédent fractionnaire d'ordre.

5. Dispositif selon les revendications 3 et 4, **caractérisé en ce que** l'asservissement règle la position de l'un des miroirs (20, 21) ou la position des deux miroirs (20, 21) du filtre interférentiel (9).

6. Dispositif selon l'une des revendications précédentes, **caractérisé en ce qu'**il comporte des moyens (12) de mesure d'intensité d'un rayonnement traversant le filtre spatial (11).

7. Dispositif selon l'une des revendications précédentes, **caractérisé en ce qu'**il comporte des moyens pour déplacer le filtre spatial (11) et le masque (40) dans une direction sensiblement perpendiculaire au rayonnement issu des moyens (9) pour générer des franges d'interférence (24).

## Claims

1. Device for detecting atmospheric turbulence, comprising a laser emission source (1), optical means (5) for collecting a backscattered beam (3) that is backscattered by targets illuminated by the emission source (1), the backscattered beam (3) being substantially centred about the wavelength of the emission source (1), and means (9) for generating interference fringes (24) resulting from the backscattered beam (3), **characterized in that** it includes a spatial filter (11) allowing only a central spot (30) of the interference fringes to be seen and, at the centre of the spatial filter (11), a mask (40) for blocking off the centre (32) of the central spot (30).

2. Device according to Claim 1, **characterized in that** the mask (40) blocks off a Mie scattering line of the collected beam (3).

3. Device according to either of the preceding claims, **characterized in that** the means (9) for generating interference fringes comprise a Fabry-Perot interference filter.

4. Device according to one of the preceding claims, **characterized in that** the means (9) for generating interference fringes (24) comprise a servomechanism that allows the central spot (30) to have no excess fractional orders.

5. Device according to Claims 3 and 4, **characterized in that** the servomechanism controls the position of one of the mirrors (20, 21) or the position of both mirrors (20, 21) of the interference filter (9).

6. Device according to one of the preceding claims, **characterized in that** it includes means (12) for measuring the intensity of a beam passing through the spatial filter (11).

7. Device according to one of the preceding claims, **characterized in that** it includes means for displacing the spatial filter (11) and the mask (40) in a direction approximately perpendicular to the beam coming from the means (9) for generating interference fringes (24).

## Patentansprüche

1. Vorrichtung zur Erfassung atmosphärischer Turbulenzen, die eine Laseremissionsquelle (1), optische Einrichtungen (5) zum Auffangen einer Strahlung (3), die von Zielen rückgestreut wird, die von der Emissionsquelle (1) beleuchtet werden, wobei die rückgestreute Strahlung (3) im Wesentlichen um eine Wellenlänge der Emissionsquelle (1) zentriert ist, und Einrichtungen (9) zur Erzeugung von Interferenzstreifen (24) aufweist, die von der rückgestreuten Strahlung (3) stammen, **dadurch gekennzeichnet, dass** sie ein Raumfilter (11), das es ermöglicht, nur einen zentralen Fleck (30) der Interferenzstreifen anzuzeigen, und in der Mitte des Raumfilters (11) eine Maske (40) aufweist, die es erlaubt, das Zentrum (32) des zentralen Flecks (30) zu verdecken.

2. Verfahren nach Anspruch 1, **dadurch gekennzeichnet, dass** die Maske (40) es ermöglicht, einen Streifen der Mie-Streuung der aufgefangenen Strahlung (3) zu verdecken.

3. Vorrichtung nach einem der vorhergehenden Ansprüche, **dadurch gekennzeichnet, dass** die Einrichtungen (9) zur Erzeugung von Interferenzstreifen ein Fabry-Perot-Interferenzfilter aufweisen.

4. Vorrichtung nach einem der vorhergehenden Ansprüche, **dadurch gekennzeichnet, dass** die Einrichtungen (9) zur Erzeugung von Interferenzstreifen (24) eine Regelung aufweisen, die es dem zentralen Fleck (30) ermöglicht, keinen partiellen Ordnungs-Exzess aufzuweisen.

5. Vorrichtung nach den Ansprüchen 3 und 4, **dadurch gekennzeichnet, dass** die Regelung die Position eines der Spiegel (20, 21) oder die Position der zwei Spiegel (20, 21) des Interferenzfilters (9) regelt.

6. Vorrichtung nach einem der vorhergehenden Ansprüche, **dadurch gekennzeichnet, dass** sie Einrichtungen (12) zur Messung der Stärke einer das Raumfilter (11) durchquerenden Strahlung aufweist.

7. Vorrichtung nach einem der vorhergehenden Ansprüche, **dadurch gekennzeichnet, dass** sie Einrichtungen aufweist, um das Raumfilter (11) und die Maske (40) in einer Richtung im Wesentlichen lotrecht zu der Strahlung zu verschieben, die von den Einrichtungen (9) zur Erzeugung von Interferenzstreifen (24) kommt.
